Europäisches Patentamt

European Patent Office

Office européen des brevets

(11) Publication number: **0 384 400 B1**

## EUROPEAN PATENT SPECIFICATION

(45) Date of publication of patent specification: **15.12.93**  (51) Int. Cl.⁵: **B62D 7/14**

(21) Application number: **90103247.4**

(22) Date of filing: **20.02.90**

(54) **Rear wheel steering angle control system for vehicle.**

(30) Priority: **21.02.89 JP 39251/89**

(43) Date of publication of application:
**29.08.90 Bulletin  90/35**

(45) Publication of the grant of the patent:
**15.12.93 Bulletin  93/50**

(84) Designated Contracting States:
**DE GB**

(56) References cited:
**EP-A- 0 289 039**
**DE-A- 3 722 086**
**DE-A- 3 803 037**
**US-A- 4 673 189**

(73) Proprietor: **NISSAN MOTOR CO., LTD.**
**2 Takara-cho, Kanagawa-ku**
**Yokohama-shi Kanagawa-ken 221(JP)**

(72) Inventor: **Mori, Kazunori**
**117-2-402 Nakashinden**
**Ebina-shi, Kanagawa-ken(JP)**

(74) Representative: **TER MEER - MÜLLER - STEIN-**
**MEISTER & PARTNER**
**Mauerkircherstrasse 45**
**D-81679 München (DE)**

Rank Xerox (UK) Business Services
(3.10/3.6/3.3.1)

**Description**

The present invention relates to a system for controlling a rear wheel steering angle for a vehicle according to the preamble of claims 1 and 2.

In an automotive vehicle without rear wheel steering (2WS), yaw rate gain and phase lag corresponding to the steering frequency f of the steering wheel tend to be quite low and to become greater as the steering frequency increases. Four wheel steering (4WS) vehicles have accordingly been developed. A system for steering the rear wheels of such a 4WS vehicle is adapted for controlling the central yaw position using the two-degrees-of-freedom model in view only of yawing and lateral displacement of the vehicle. Thus, based on a control transfer function for steering the rear wheels expressed theoretically by one linear expression over another linear expression(i.e.$\frac{X}{X}$), a target rear wheel steering angle is determined.

It will be appreciated that the prior art system does not take account of variations in attitude during running such as roll and compliance steering or suspension steer caused by lateral force acting on a wheel when a slip angle is produced on the wheel. As a result, due to roll steering (the influence of compliance steering is relatively small), the value of the rear wheel steering angle does not increase, causing variation in yaw rate and phase lag to increase. This results in only a small improvement in yaw damping from the rear wheel steering.

It is a desired characteristic that the value of the steering angle increase as the steering frequency becomes higher.

The US-A 4 786 066 discloses a rear wheel steering system which is said to be capable of improving turning characteristics of a vehicle. The system meets requirements for different steering situations at each steering stage of the front wheels for various kinds of vehicles. The rear wheels are controlled independently with respect to each other.

It is accordingly an object of the present invention to provide a system for controlling a rear wheel steering angle using the three-degrees-of-freedom model in view of suspension steering as well as yawing and lateral displacement of a vehicle.

To comply with this object, the system according to the invention is characterized by the features of claims 1. and 2.

Fig. 1 is an explanatory view for deriving an equation of motion which shows a two-wheeled vehicle.

Fig. 2 is a schematic view which shows a system for controlling a rear wheel steering angle of a vehicle according to the present invention.

Fig. 3 is a block diagram which shows a rear wheel steering angle control system according to the invention.

Fig. 4 is a graph which shows control constants of a transfer function.

Fig. 5 is a graph which shows yaw rate gain and phase angle properties caused by a rear wheel steering control according to the invention and those of a 2WS vehicle and prior art rear wheel steering angle control.

Fig. 6 is a graph which shows control constants of an approximate equation of a transfer function.

Fig. 7 is a graph which shows yaw rate gain and phase angle properties caused by a rear wheel steering angle control effected according to an approximate equation of a transfer function.

Fig. 8 shows rear wheel steering angle increase of each term of an approximate equation of a transfer function.

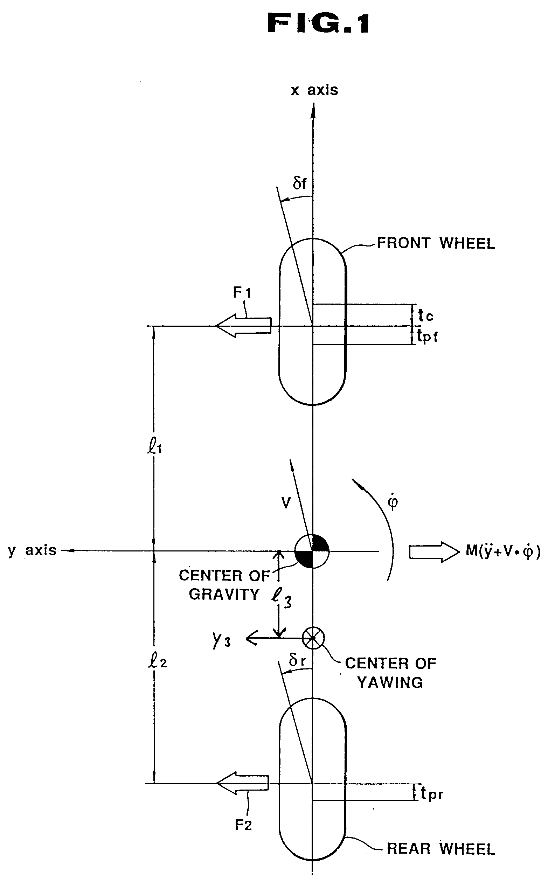

Referring now to the drawings, particularly to Fig. 1, the fundamental formulas required for designing a rear wheel steering angle control system according to the present invention will be first described hereinbelow.

For the sake of simplicity, the following representation is limited to a two-wheeled vehicle model shown in X-Y coordinates. Reference letters used below are as follows:

M : vehicle weight

$I_1$ : a yawing moment of inertia

$I_2$ : a rolling moment of inertia

$\ell_1$ : a distance between the center of gravity and the center point of a front axle

$\ell_2$ : a distance between the center of gravity and the center point of a rear axle

$\ell_3$ : a distance between the center of gravity and the center of yawing

$t_c$ : a caster-trail

$t_{pf}$ : a pneumatic trail of front wheels

$t_{pr}$ : a pneumatic trail of rear wheels

$t_f$ : tread between front wheels

$t_r$ : tread between rear wheels

$h_f$ : road height of the rolling center between the front wheels

$h_r$ : road height of the rolling center between the rear wheels

$h_g$ : a road height of the center of gravity

$h$ : a distance between the center of gravity and a rolling axis

$K_{\phi f}$ : a rolling rigidity of front wheels

$K_{\phi r}$ : a rolling rigidity of rear wheels

$K_{st}$ : a steering rigidity

$\alpha_f$ : damping force of front wheels

$\alpha_r$ : damping force of rear wheels

$C_{rf}$ : a roll steer coefficient of front wheels

$C_{rf}$ : a roll steer coefficient of rear wheels

$C_{sf}$ : a compliance coefficient of front wheels

$C_{sr}$ : a compliance coefficient of rear wheels

$C_1$ : total cornering power of the two front wheels

$C_2$ : total cornering power of the two rear wheels

$\delta_f$ : an actual steering angle of front wheels

$\delta_r$ : an actual steering angle of rear wheels

$\delta_o$ : a front wheel steering angle corresponding to a steered angle $\theta$ of a steering wheel (where a steering gear ratio is N, $\delta_o = \theta / N$)

$F_1$ : cornering force of front wheels

$F_2$ : cornering force of rear wheels

$V$ : vehicle speed

$y$ : side displacement of the center of gravity

$Y_3$ : side displacement of the center of yawing

$\psi$ : a yaw angle

$\phi$ : a roll angle

$S$ : Laplace's operator

$G$ : a rear wheel control transfer function

In the model shown in Fig. 1, the following equations are obtained.

$$M(\ddot{y} + V\dot{\phi}) = F_1 + F_2 \qquad ----- (1)$$

$$I_1 \ddot{\psi} = (\ell_1 - t_{pf})F_1 - (\ell_2 + t_{pr})F_2 \qquad ----- (2)$$

$$I_2 \ddot{\phi} + \frac{(t^2_f \alpha_f + t^2_r \alpha_r)}{2} \dot{\phi} + (K_{\phi f} + K_{\phi r})\phi$$

$$= \{h_g - (h_f \ell_2 + h_r \ell_1)/(\ell_1 + \ell_2)\} (F_1 + F_2) \qquad ----- (3)$$

The cornering forces $F_1$ and $F_2$ are presented by the following equations.

$$F_1 = C_1\{\delta_f - (\dot{y} + \ell_1\dot{\psi})/V\}$$
$$F_2 = C_2\{\delta_r - (\dot{y} - \ell_2\dot{\psi})/V\}$$

In the rear wheel steering angle control system of the invention, the three-degrees-of-freedom steering model is used wherein suspension-steer is considered in addition to parameters of yawing and lateral displacement of a vehicle. Thus, the actual front wheel steering angle $\delta_f$ and the actual rear wheel steering angle $\delta_r$ are expressed as:

$$\delta_f = \theta/N - \{(t_c + t_{pf})/K_{ST}\} F_1 + C_{Rf}(t_f/2)\phi + C_{sf}(F_1/2)$$

$$\delta_r = \delta_a \qquad\qquad\qquad\qquad + C_{Rr}(t_r/2)\phi + C_{sf}(F_2/2)$$

Where $\{(t_c + t_{pf})/K_{ST}\}\ F_1$ conforms to a steering rigidity of a front wheel, $C_{Rf}(t_f/2)\phi$ and $C_{Rr}(t_r/2)\phi$ conform to the roll-steering of front and rear wheels respectively, $C_{sf}(F_1/2)$ and $C_{sf}(F_2/2)$ conform to the compliance-steering of front and rear wheels respectively, and $\delta_a$ conforms to a rear wheel steering operation angle. If rear wheel steering is controlled so that the degree of lateral displacement velocity of the yaw center is set to zero, the following operational relation is obtained.

$$\dot{y}_3 = \dot{y} - \ell_3\dot{\psi} = 0$$
$$\text{thus, } \dot{y} = \ell_3\dot{\psi} \quad (4)$$

By using the following letters in order to facilitate the above equations, we rewrite the equations as:

$$a' = \ell_1 - t_{pf} \qquad\qquad C_{R1} = C_{Rf}\frac{t_f}{2}$$

$$b' = \ell_2 + t_{pr} \qquad\qquad C_{R2} = C_{Rr}\frac{t_r}{2}$$

$$\varepsilon' = \frac{t_f^2 \alpha_f + t_r^2 \alpha_r}{2} \qquad\qquad C_{s1} = \frac{C_{sf}}{2}$$

$$K_1 = K\phi_f + K\phi_r \qquad\qquad C_{sr} = \frac{C_{sr}}{2}$$

$$h = h_g - \frac{h_f \ell_2 + h_r \ell_1}{\ell_1 + \ell_2} \qquad\qquad \frac{\theta}{N} = \delta_0$$

$$K_2 = \frac{t_c + t_{pf}}{K_{ST}}$$

By substituting the above equations regarding an actual steering angle for the equations of cornering force and arranging them according to Laplace transformation, the following equations are obtained.

$$F_1 = C_1'(\delta_0 + C_{R1}\phi - \frac{\ddot{y} + \ell_1\dot{\phi}}{v})$$

$$F_2 = C_2'(\delta_a + C_{R2}\phi - \frac{\ddot{y} - \ell_2\dot{\phi}}{v})$$

where

$$C_1' = \frac{C_1}{1 + C_1(K_2 - C_{s1})}$$

and

$$C_2' = \frac{C_2}{1 - C_2 C_{s2}}$$

By substituting the equation (4) for the equations (1) to (3), we obtain equations as follow:

$$\left\{ M(\ell_3 S + V) + \frac{C_1'(a + \ell_3) + C_2'(\ell_3 - b)}{V} \right\} \dot{\phi}$$

$$- (C_1' C_{R1} + C_2' C_{R2}) \phi = (C_1' + C_2' G) \delta_o \qquad ----- (1)'$$

$$\left\{ I_1 S + \frac{aC_1'(a + \ell_3) - bC_2'(\ell_3 - b)}{V} \right\} \dot{\phi}$$

$$+ (bC_2' C_{R2} - aC_1' C_{R1}) \phi = (aC_1' - bC_2' G) \delta_o \qquad ----- (2)'$$

$$\dot{\phi} = \frac{I_2 S^2 + \xi S + K_1}{Mh(\ell_3 S + V)} \phi \qquad ----- (3)'$$

It is convenient to use the signs $\alpha_1$, $\beta_1$, $\epsilon_1$, and $\eta_1$, as follows:

$$\alpha_1 = C_1'(a + \ell_3) + C_2'(\ell_3 - b)$$

$$\beta_1 = aC_1'(a + \ell_3) - bC_2'(\ell_3 - b)$$

$$\epsilon_1 = C_1' C_{R1} + C_2' C_{R2}$$

$$\eta_1 = bC_2' C_{R2} - aC_1' C_{R1}$$

and by arranging the equations (1)' and (2)' to determinant, we obtain the following:

$$\begin{bmatrix} M\ell_3 S + MV + \dfrac{\alpha_1}{V} & -\epsilon_1 \\ \\ I_1 S + \dfrac{\beta_1}{V} & \eta_1 \end{bmatrix} \begin{Bmatrix} \dot{\phi} \\ \\ \phi \end{Bmatrix} = \begin{Bmatrix} C_1' + C_2' G \\ \\ aC_1' - bC_2' G \end{Bmatrix} \delta_0$$

By solving the above equation for

$$\begin{Bmatrix} \dot{\phi} \\ \phi \end{Bmatrix},$$

it is expressed as follows:

$$\begin{pmatrix} \dot{\phi} \\ \phi \end{pmatrix} = \frac{1}{\Delta} \begin{pmatrix} \eta_1 & \varepsilon_1 \\ -I_1 S - \dfrac{\beta_1}{V} & M\ell_3 S + MV + \dfrac{\alpha_1}{V} \end{pmatrix} \begin{pmatrix} C_1' + C_2' G \\ aC_1' - bC_2' G \end{pmatrix} \delta_0$$

where

$$\Delta = \eta_1 (M\ell_3 S + MV + \frac{\alpha_1}{V}) + \varepsilon_1 (I_1 S + \frac{\beta_1}{V}).$$

By expanding the above equation, we obtain as follows:

$$\Delta \frac{\dot{\phi}}{\delta_0} = \eta_1 (C_1' + C_2' G) + \varepsilon_1 (aC_1' - bC_2' G)$$

$$= C_1' (\eta_1 + a\varepsilon_1) + C_2' (\eta_1 - b\varepsilon_1) G$$

$$\Delta \frac{\phi}{\delta_0} = - (I_1 S + \frac{\beta_1}{V})(C_1' + C_2' G)$$

$$+ (M\ell_3 S + MV + \frac{\alpha_1}{V})(aC_1' - bC_2' G)$$

$$= - (MV + \frac{\alpha_1}{V}) aC_1' - \frac{\beta_1 C_1'}{V} + (aC_1' M\ell_3 - I_1 C_1') S$$

$$- \left[ ((MV + \frac{\alpha_1}{V}) bC_2' + \frac{\beta_1 C_2'}{V}) + (bC_2' M\ell_3 + I_1 C_2') S \right] G$$

$$(I_2 S^2 + \xi S + K_R) \phi = hM(\ell_3 S + V) \dot{\phi}$$

By using the following letters to simplify the equations,

$$P_0' = MV + \frac{\alpha_1}{V} \qquad\qquad I_2' = \frac{I_2}{h}$$

$$P_1' = C_1'(\eta_1 + a\varepsilon_1) \qquad\qquad Q' = \frac{\xi}{h}$$

$$P'_2 = C'_2(n_1 + b\varepsilon_1) \qquad \qquad K_R' = \frac{K_R}{h}$$

$$P'_3 = P'_0 aC'_1 - \frac{\beta_1 C'_1}{V}$$

$$P'_4 = aC'_1 M\ell_3 - I_1 C'_1$$

$$P'_5 = P'_0 bC'_2 + \frac{\beta_1 C'_2}{V}$$

$$P'_6 = bC'_2 M\ell_3 - I_1 C'_2$$

they may be rewritten as follows:

$$\Delta \frac{\dot{\phi}}{\delta_0} = P'_1 + P'_2 G \qquad \qquad ----- (5)$$

$$\Delta \frac{\phi}{\delta_0} = P'_3 + P'_4 S - (P'_5 + P'_6 S)G \qquad ----- (6)$$

$$(I'_2 S^2 + Q'S + K'_R)\phi = M(\ell_3 S + V)G \qquad ----- (7)$$

By substituting the equations (5) and (6) for the equation (7) and solving it for the G, the transfer function

$$\frac{\delta_r}{\delta_f} = G$$

for controlling a rear wheel steering angle is yielded as follows:

$$(I'_2 S^2 + Q'S + K'_R) \{(P'_3 + P'_4 S) - (P'_5 + P'_6 S)G\}$$

$$= (M\ell_3 S + MV)(P'_1 + P'_2 G)$$

$$(I'_2 S^2 + Q'S + K'_R)(P'_3 + P'_4 S) - (M\ell_3 S + MV)P'_1$$

$$= \{(I'_2 S^2 + Q'S + K'_R)(P'_5 + P'_6 S) + (M\ell_3 S + MV)P'_2\}G$$

thus,

$$G = (d_{00} + d_{01}S + d_{02}S^2 + d_{03}S^3)/(e_{00} + e_{01}S + e_{02}S^2 + e_{03}S^3)$$

where

$$d_{00} = K_R'P_3' - MVP_1'$$

$$d_{01} = K_R'P_4' + Q'P_3' - M\ell_3P_1'$$

$$d_{02} = Q'P_4' + I_2'P_3'$$

$$d_{03} = I_2'P_4'$$

$$e_{00} = K_R'P_5' + P_2'MV$$

$$e_{01} = K_R'P_6' + Q'P_5' + P_2'M\ell_3$$

$$e_{02} = Q'P_6' + I_2'P_5'$$

$$e_{03} = I_2'P_6'$$

In order to simplify the equation, letters are used as follows,

$$K = d_{00}/e_{00} \qquad\qquad T_1 = e_{01}/e_{00}$$

$$\tau_1 = d_{01}/e_{00} \qquad\qquad T_2 = e_{02}/e_{00}$$

$$\tau_2 = d_{02}/e_{00} \qquad\qquad T_3 = e_{03}/e_{00}$$

$$\tau_3 = d_{03}/e_{00}$$

and, the transfer function G is rewritten as follows:

$$G = (K + \tau_1 S + \tau_2 S^2 + \tau_3 S^3)/(1 + T_1 S + T_2 S^2 + T_3 S^3) \qquad (8)$$

It will be appreciated that the $\epsilon_1$ and the $\eta_1$ are terms each of which is multiplied by the roll-steer coefficient and thus the roll-steer refers to all terms of the K, the $\tau_1$ to $\tau_3$, the $T_1$ to $T_3$. This results in a rear wheel steering angle determined in view of suspension steering, which satisfies the transfer function G given by a fractional expression of, a third order expression / a third order expression. Therefore, improvement in yaw damping due to rear wheel steering operations in high frequency steering ranges can be maintained without degradation by suspension steering.

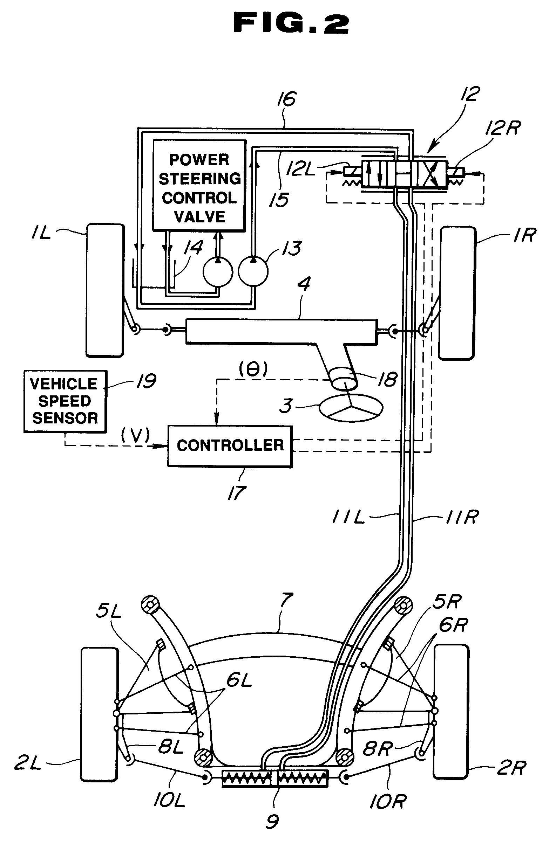

Referring to Fig. 2, a system is shown which is adapted for controlling a steering angle for the rear wheels of a vehicle according to the instant invention.

Front wheels 1L (left) and 1R (right) are rotatably connected to a steering wheel 3 via a steering gear 4. The rotation of the steering wheel 4 by an angle $\theta$ causes the front wheels to rotate by an angle $\delta_f$. If a steering gear ratio is a N, the relation between the $\theta$ and the $\delta_f$ is expressed by $\delta_f = \theta/N$. Rear wheels 2L and 2R are suspended by a rear suspension member 7 of a rear suspension system including transverse links 5L and 5R and upper arms 6L and 5R. An actuator 9 is provided which is connected between rear knuckle arms 8L and 8R through side rods 10L and 10R to steer the rear wheels 2L and 2R.

The actuator 9 is a spring centered double acting hydraulic pressure cylinder, which has two chambers each connecting to an electromagnetic proportional pressure control valve 12 through pressure lines 11L and 11R. The control valve 12 is connected to a pressure source including a hydraulic pump 12 and a reservoir tank 14 through a pressure line 15 and a drain line 16. This control valve 12 is a spring centered three position valve which is adapted to provide no pressure in the pressure line 11L and 11R when both solenoids 12L and 12R are in the OFF state and applying working pressure to the pressure line 11R which is proportional to a period of time during the solenoid 12R is energized.

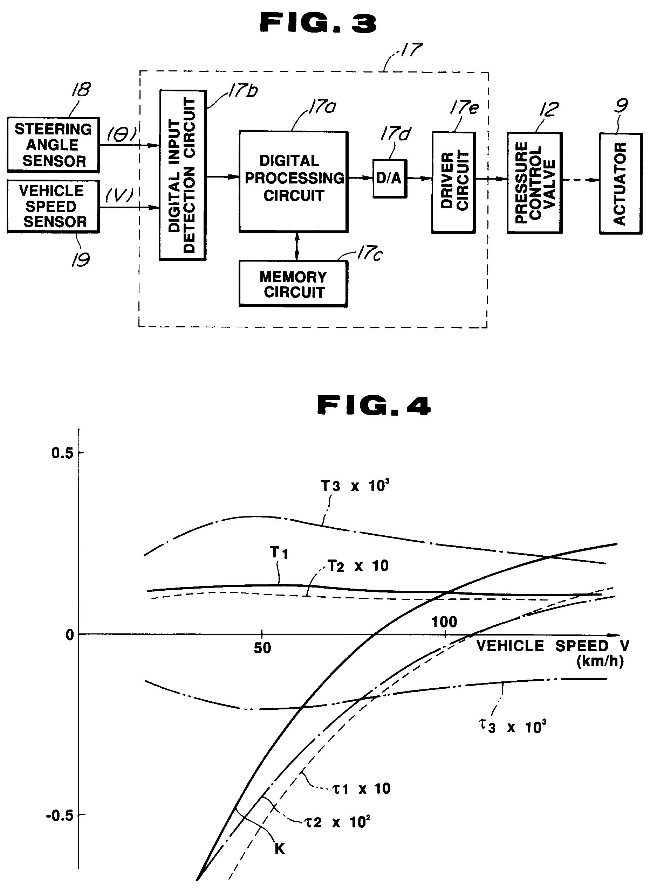

A controller 17 is provided which electronically controls the switching operation and the energized time of the solenoids 12L and 12R. This controller 17, as shown in Fig. 3, generally comprises a digital arithmetic circuit 17a, a digital input signal detecting circuit 17b, a memory circuit 17c, a D/A converter 17d, and a drive circuit 17e. A steering angle sensor 18 and a vehicle speed sensor 19 are further provided. The steering angle sensor is adapted for sensing the steered angle $\theta$ of the steering wheel 3 to provide a digital signal to the digital input detecting circuit 17b. The vehicle speed sensor 19 is adapted for sensing vehicle speed V to provide a digital signal to the circuit 17b. Based on these input information signals, the digital arithmetic circuit 17a determines a rear wheel steering angle in the following manner.

From a data table storing data as shown in Fig. 4, control constants K, $\tau_1$ to $\tau_3$, and $T_1$ to $T_3$ corresponding to a vehicle speed V are looked up to calculate the transfer function G according to the equation (8) based on them. Subsequently, a front wheel steering angle $\delta_f = \theta/N$ corresponding to the detected actual steered angle $\theta$ is determined. A target rear wheel steering angle $\delta_r = \delta_f G$ is calculated by multiplying the front wheel steering angle $\delta_f$ by the transfer function G to provide digital signals corresponding to the result to the D/A converter 17d, in which these digital signals are then converted into an analog signal. The drive circuit 17e converts the analog signal to current i corresponding to the target rear wheel steering angle $\delta_r$ to output it to the control valve 12 for controlling the working pressure to steer the rear wheels.

At this time, the controller 17 selectively determines as to whether the current i has to be supplied to the solenoids 12L and 12R of the control valve based on the steered angle $\theta$ to provide a working pressure which corresponds to the current i (e.i., a calculated rear wheel steering angle $\bar{\delta_r}$) to the corresponding pressure lines 11L and 11R. This causes actuator 9 to be operated so as to allow the side rods 10L and 10R to be moved by a stroke corresponding to the pressure, steering the rear wheel by an angle corresponding to the mathematically calculated result.

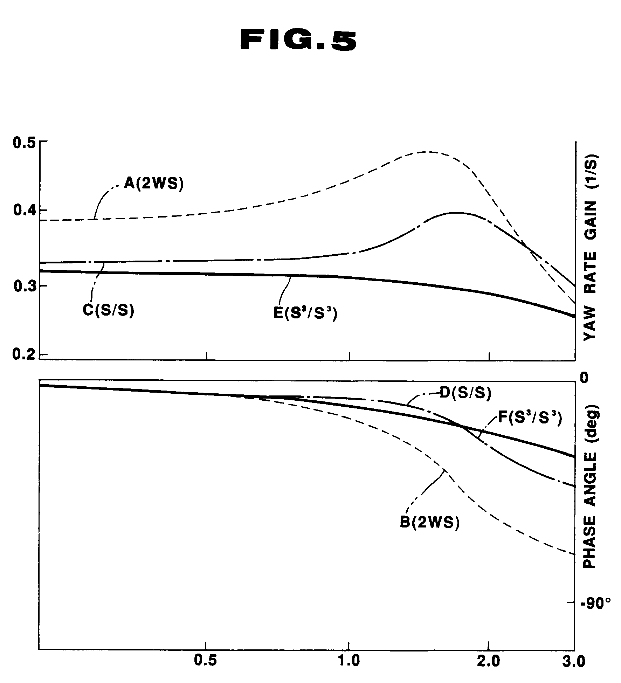

As is clear from the above, because the equation (8) is the transfer function in the form of a third order expression / a third order expression including a suspension steer parameter as well as yaw and lateral displacement parameters, the mathematically calculated target rear wheel steering angle $\delta_r$ pre-includes an angle taking account of suspension steering. It will be appreciated that such rear wheel steering control prevents increase in the rear wheel steering angle from being reduced by suspension steering. Yaw rate gain and phase angle characteristics are given by curves E and F in Fig. 5. Variation in the yaw rate gain and phase delay are maintained to be reduced even within a high steering frequency.

However, the rear wheel control system as described above requires a high speed calculating computer and a digital filter for example, resulting in a high cost and complex control circuit. Accordingly, in order to reduce a manufacturing cost and simplify the control circuit, an approximate expression of the transfer function may be obtained in a manner described hereinbelow to control the rear wheel steering angle.

A hydraulic system for steering the rear wheels tends generally to provide a first order lag time. If a first order lag time constant is T, a hydraulic lag in the rear wheel steering control is expressed by $1 / (1 + TS)$. Accordingly, the above equation (8) may be multiplied by $(1 + TS)$ to approximately determine the transfer function G of the mathematically calculated rear wheel steering target angle $\bar{\delta_r}$ relative to the actual front wheel steered angle $\delta_f$ so as to compensate the hydraulic lag. We therefore obtain the following equation.

9

$$G = \frac{\bar{\delta}_r}{\delta_f}$$

$$= \frac{K + \tau_1 S + \tau_2 S^2 + \tau_3 S^3}{1 + T_1 S + T_2 S^2 + T_3 S^3} (1 + TS)$$

Assuming that a value of the terms S is extremely small in the above equation, it can be rewritten as follows:

$$\frac{\bar{\delta}_r}{\delta_f} \doteq (K + \tau_1 S + \tau_2 S^2 + \tau_3 S^3)(1 + TS)$$

$$X \{1 - (T_1 S + T_2 S^2 + T_3 S^3) + (T_1 S +$$

$$T_2 S^2 + T_3 S^3)^2 - (T_1 S + T_2 S^2 + T_3 S^3)^3 \text{----------} \}$$

The above equation can be further rewritten as follows:

$$\frac{\bar{\delta}_r}{\delta_f} \doteq K + \{\tau_1 + K(T - T_1)\}S$$

$$+ \{\tau_2 + \tau_1(T - T_1) - K(T_2 - T^2_2 + T_1 T)\}S^2$$

In the above equation, if each the $\{\tau_1 + K(T - T_1)\}S$ and $\{\tau_2 + \tau_1(T - T_1) - K(T_2 - T^2_2 + T_1 T)\}$ is replaced by a $\tau$ and a $\tau'$ for the sake of simplicity, the following equation obtains which is the relation between the actual front wheel steered angle $\delta_f$ and the target rear wheel steered angle $\bar{\delta}_r$.

$$\frac{\bar{\delta}_r}{\delta_f} \doteq K + \tau S + \tau' S^2$$

Thus, the relation between the actual front wheel steered angle $\delta_f$ and the actual rear wheel steered angle $\delta_r$ is expressed as follows due to hydraulic lag.

$$\frac{\delta_r}{\delta_f} \doteq \frac{K + \tau S + \tau' S^2}{1 + TS}$$

The rear wheel steering angle control in view of hydraulic lag has been disclosed in U.S. Patent Application No. 419,161 filed on October 10, 1989, entitled "REAR WHEEL STEERING ANGLE CONTROL SYSTEM FOR VEHICLE" by Kasunori MORI et al., assigned to NISSAN MOTOR CO., LTD, the disclosure of which is incorporated herein by reference.

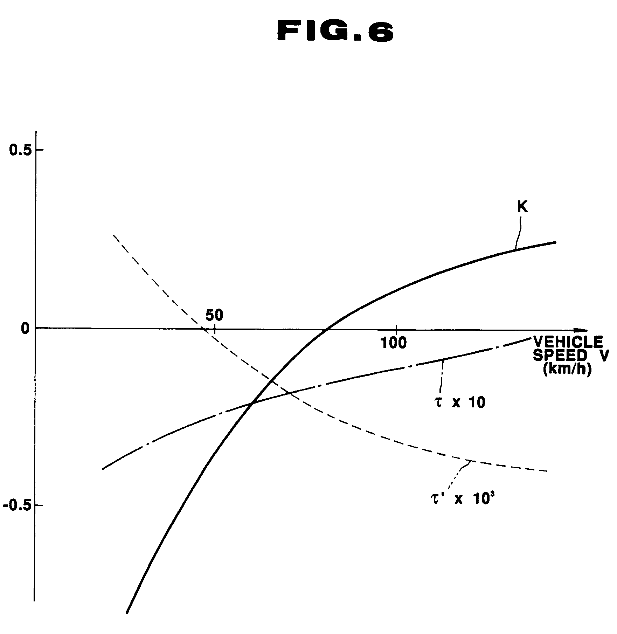

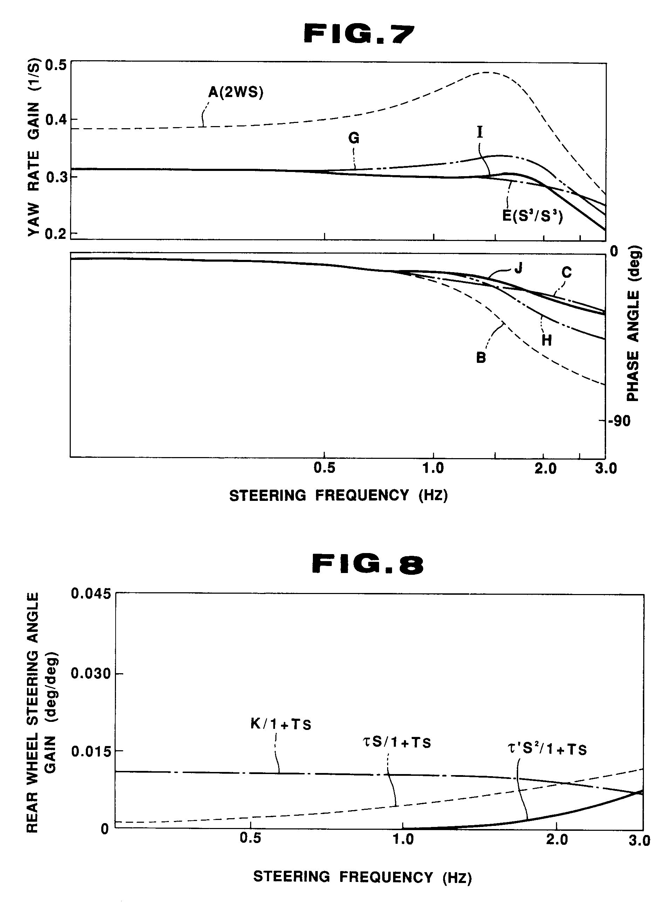

Fig. 6 shows control constants K, $\tau$, and $\tau'$ of the above approximate equation. When the rear wheel steering control is effected using the above approximate equation based on such control parameters as yaw rate gain and phase angle characteristics are shown by curves G and H in Fig. 7 respectively wherein like numbers refer to like characteristics. Because terms of a higher order of Laplace's operator S have been omitted in calculation of the approximate equation, errors between logical characteristics C and E and actual characteristics G and H increase in high frequency steering ranges.

Fig. 8 shows rear wheel steering gains caused by the terms K/(1 + TS), $\tau$S/(1 + TS), and $\tau''$S$^2$/(1 + TS) of the approximate equation. It will be noted that the gain of the term of $\tau'$ increases only the range of high steering frequency. Therefore, the great absolute value of the term of $\tau'$ can compensate the shifting between the logical value and the actual value effectively. For example, if the absolute value of $\tau'$ is increased by two and half times as that shown in Fig.6, the yaw rate gain and the phase angle characteristics are changed from curves indicated by G and H to curves I and J in Fig. 7, resulting in greatly improved accuracy of approximation relative to the logical characteristics C and E.

## Claims

1. System for controlling a rear wheel steering angle for a vehicle, comprising
   speed sensing means (19) for sensing the vehicle speed and providing a signal indicative thereof,
   steering sensing means (18) for sensing a steered angle of a steering wheel of the vehicle to determine an actual steered angle of the front wheels which includes a steered angle component of the front wheels caused by suspension steering of the front wheels based on the signal from the speed sensing means and providing a signal indicative thereof,
   controller means (17) responsive to the signals from the first and second sensing means for determining a target steering angle of the rear wheels and providing a signal indicative thereof, and
   steering means (12,9) responsive to the signal from the controller means (17) for steering the rear wheels (2L,2R) according to the target steering angle;
   **characterized** in that
   the controller means (17) determines the target steering angle of the rear wheels (2R,2L) according to the following equation

   $$\delta_r(S)/\delta_f(S) = (K + \tau_1 S + \tau_2 S^2 + \tau_3 S^3)/(1 + T_1 S + T_2 S^2 + T_3 S^3)$$

   where $\delta_r(S)$ is a value into which a rear wheel steered angle is transformed according to a Laplace transformation, $\delta_f(S)$ is a value into which a front wheel steering angle is transformed according to a Laplace transformation, K, $\tau_1$, $\tau_2$, $\tau_3$, $T_1$, $T_2$ and $T_3$ are functions relating to the vehicle speed, and S is a Laplace operator.

2. System for controlling a rear wheel steering angle for a vehicle, comprising
   speed sensing means (19) for sensing the vehicle speed and providing a signal indicative thereof,
   steering sensing means (18) for sensing a steered angle of a steering wheel of the vehicle to determine an actual steered angle of the front wheels which includes a steered angle component of the front wheels caused by suspension steering of the front wheels based on the signal from the speed sensing means and providing a signal indicative thereof,
   controller means (17) responsive to the signals from the first and second sensing means for determining a target steering angle of the rear wheels and providing a signal indicative thereof, and
   steering means (12,9) responsive to the signal from the controller means (17) for steering the rear wheels (2L,2R) according to the target steering angle;
   **characterized** in that
   said controller means (17) determines the target steering angle of the rear wheels (2R,2L) according to the following approximate equation so as to compensate reduction of yaw damping caused by suspension steering

   $$\frac{\delta_r(S)}{\delta_f(S)} = (K + \tau S + \tau' S^2)/(1 + TS)$$

   where $\delta_f(S)$ is a value into which a front wheel steered angle is transformed according to a Laplace transformation, $\delta_r(S)$ is a value into which a rear wheel steering angle is transformed according to a Laplace transformation, K, $\tau$ and $\tau'$ are functions relating to the vehicle speed, S is a Laplace operator, and T is a constant of a first order lag time of the system.

**Patentansprüche**

1. System zur Steuerung eines Hinterrad-Lenkwinkels für ein Fahrzeug, mit
einem Geschwindigkeitssensor (19) zum Abtasten der Fahrzeuggeschwindigkeit und Liefern eines entsprechenden Signals,
einem Lenkungssensor (18) zum Abtasten eines gelenkten Winkels des Lenkrades des Fahrzeugs zur Bestimmung eines tatsächlich gelenkten Winkels der Vorderräder, der eine gelenkte Winkelkomponente der Vorderräder einschließt, die durch die Aufhängungs-Lenkung der Vorderräder bestimmt sind, auf der Basis des Signals des Geschwindigkeitssensors, und Liefern eines entsprechenden Signals,
einer Steuereinrichtung (17), die auf das Signal des ersten und zweiten Sensors anspricht und einen Ziel-Lenkwinkel der Hinterräder bestimmt und ein entsprechendes Signal abgibt, und
einer Lenkeinrichtung (12,9), die auf das Signal der Steuereinrichtung (17) anspricht und die Hinterräder (2L,2R) entsprechend dem Ziel-Lenkwinkel lenkt
dadurch **gekennzeichnet, daß**
die Steuereinrichtung (17) den Ziel-Lenkwinkel der Hinterräder (2R,2L) entsprechend der folgenden Gleichung bestimmt

$$\delta_r(S)/\delta_f(S) = (K + \tau_1 S + \tau_2 S^2 + \tau_3 S^3)/(1 + T_1 S^2 + T_2 S^3)$$

In dieser Gleichung ist $\delta_r(S)$ ein Wert, in den der gelenkte Hinterradwinkel transformiert wird entsprechend einer Laplace-Transformation, $\delta_f(S)$ ein Wert, in den ein Vorderrad-Lenkwinkel transformiert wird entsprechend einer Laplace-Transformation, $K, \tau_1, \tau_2, \tau_3, T_1, T_2$ und $T_3$ Funktionen, die sich beziehen auf die Fahrzeuggeschwindigkeit, und S ein Laplace-Operatur.

2. System zur Steuerung eines Hinterrad-Lenkwinkels eines Fahrzeugs, mit
einem Geschwindigkeitssensor (19) zum Abtasten der Fahrzeuggeschwindigkeit und Liefern eines entsprechenden Signals,
einem Lenkungssensor (18) zum Abtasten eines gelenkten Winkels des Lenkrades des Fahrzeugs zur Bestimmung eines tatsächlich gelenkten Winkels der Vorderräder, der eine gelenkte Winkelkomponente der Vorderräder einschließt, die durch die Aufhängungs-Lenkung der Vorderräder bestimmt sind, auf der Basis des Signals des Geschwindigkeitssensors, und Liefern eines entsprechenden Signals,
einer Steuereinrichtung (17), die auf das Signal des ersten und zweiten Sensors anspricht und einen Ziel-Lenkwinkel der Hinterräder bestimmt und ein entsprechendes Signal abgibt, und
einer Lenkeinrichtung (12,9), die auf das Signal der Steuereinrichtung (17) anspricht und die Hinterräder (2L,2R) entsprechend dem Ziel-Lenkwinkel lenkt
dadurch **gekennzeichnet**, daß
die Steuereinrichtung (17) den Ziel-Lenkwinkel der Hinterräder (2R,2L) entsprechend der folgenden Annäherungsgleichung bestimmt zur Kompensation einer Reduktion der Gierdämpfung, die verursacht ist durch Aufhängungs-Lenkung:

$$\frac{\delta_r(S)}{\delta_f(S)} = (K + \tau S + \tau' S^2)\ /(1 + TS)$$

In dieser Gleichung ist $\delta_f(S)$ ein Wert, in den der gelenkte Vorderradwinkel umgewandelt wird entsprechend einer Laplace-Transformation, $\delta_r(S)$ ein Wert, in den der Hinterrad-Lenkwinkel umgewandelt wird entsprechend einer Laplace-Transformation, H, $\tau$ und $\tau'$ Funktionen, die sich auf die Fahrzeuggeschwindigkeit beziehen, S ein Laplace-Operator und T eine Konstante einer Verzögerungszeit erster Ordnung des Systems.

**Revendications**

1. Système pour commander un angle de braquage des roues arrière d'un véhicule comprenant
un moyen captant la vitesse (19) pour capter la vitesse du véhicule et fournir un signal indiquant celle-ci,
un moyen captant la direction (18) pour capter un angle de braquage d'un volant de direction du véhicule pour déterminer un angle de braquage actuel des roues avant qui comprend une composante d'angle de braquage des roues avant provoquée par le braquage en suspension des roues avant sur la base d'un signal provenant du moyen captant la vitesse et fournissant un signal indiquant celle-ci,

un moyen de commande (17) répondant aux signaux provenant des premier et deuxième moyens capteurs pour déterminer un angle de braquage cible des roues arrière et fournir un signal indiquant celui-ci, et

un moyen de direction (12, 9) répondant au signal provenant du moyen de commande (17) pour diriger les roues arrière (2L, 2R) conformément à l'angle de direction cible ;

caractérisé en ce que

le moyen de commande (17) détermine l'angle de braquage cible des roues arrière (2R, 2L) conformément à l'équation suivante

$$\delta_r(S)/\delta_f(S) \ = \ )K \ + \ \tau_1 S \ + \ \tau_2 S^2 \ + \ \tau_3 S^3)/(1 + T_1 S + T_2 S^2 + T_3 S^3)$$

dans laquelle $\delta_r(S)$ est une valeur en laquelle un angle de braquage de roues arrière est transformé selon une transformation Laplace, $\delta_f(S)$ est une valeur en laquelle l'angle de braquage de roues avant est transformé selon une transformation Laplace, K, $\tau_1$, $\tau_2$, $\tau_3$, $T_1$, $T_2$ et $T_3$ sont des fonctions se rapportant à la vitesse du véhicule, et S est un opérateur Laplace.

2. Système pour commander un angle de braquage des roues arrière d'un véhicule comprenant

un moyen capteur de vitesse (19) pour capter la vitesse du véhicule et fournir un signal indiquant celle-ci,

un moyen captant la direction (18) pour capter l'angle de braquage d'un volant de direction du véhicule afin de déterminer un angle de braquage actuel des roues avant, qui comprend une composante d'angle de braquage des roues avant provoquée par le braquage en suspension des roues avant sur la base d'un signal provenant du moyen captant la vitesse et fournissant un signal indiquant celle-ci,

un moyen de commande (17) répondant aux signaux provenant des premier et deuxième moyens capteurs pour déterminer un angle de braquage cible des roues arrière et pour fournir un signal indiquant celui-ci, et

un moyen de direction (12, 9) répondant au signal provenant du moyen de commande (17) pour diriger les roues arrière (2L, 2R) selon l'angle de braquage cible;

caractérisé en ce que

ledit moyen de commande (17) détermine l'angle de braquage cible des roues arrière (2R, 2L) selon l'équation par approximation suivante de façon à compenser la réduction de l'amortissement du lacet provoquée par le braquage en suspension

$$\frac{\delta_r(S)}{\delta_f(S)} = (K + \tau S + \tau' S^2)/(1 + TS)$$

dans laquelle $\delta_f(S)$ est une valeur en laquelle un angle de braquage de roues avant est transformé selon une transformation Laplace, $\delta_r(S)$ est une valeur en laquelle un angle de braquage de roues arrière est transformé selon une transformation Laplace, K, $\tau$ et $\tau'$ sont des fonctions se rapportant à la vitesse du véhicule, S est un opérateur Laplace et T est une constante d'un temps de retard de premier ordre du système.

# FIG.1

# FIG.2

# FIG. 3

```
                                                    ⟋17
        ┌ ─ ─ ─ ─ ─ ─ ─ ─ ─ ─ ─ ─ ─ ─ ─ ─ ─ ─ ─ ─ ─ ─ ─ ┐
                                                              17e
   18   │   ┌──────────┐ 17b  ┌──────────┐ 17d  ┌────────┐│  12          9
┌──────────┐│  DIGITAL  │     │  DIGITAL  │     │         ││┌──────────┐┌──────────┐
│ STEERING │(θ)│ INPUT  │     │PROCESSING │ │D/A││ DRIVER ││PRESSURE  ││          │
│  ANGLE   │──→│DETECTION│──→ │  CIRCUIT  │→   →│ CIRCUIT │→│CONTROL  │→│ ACTUATOR │
│  SENSOR  │ │  CIRCUIT │     │           │     │         ││VALVE     ││          │
└──────────┘│└──────────┘     └──────────┘     └────────┘│└──────────┘└──────────┘
┌──────────┐│              17a                            │
│ VEHICLE  │(V)│                                          │
│  SPEED   │──→│            ┌──────────┐ 17c               │
│  SENSOR  │ │             │  MEMORY  │                    │
└──────────┘│             │  CIRCUIT  │                    │
   19       │             └──────────┘                    │
        └ ─ ─ ─ ─ ─ ─ ─ ─ ─ ─ ─ ─ ─ ─ ─ ─ ─ ─ ─ ─ ─ ─ ─ ┘
```

# FIG. 4

# FIG.5

# FIG.6

# FIG.7

# FIG.8